(19) Europäisches Patentamt
European Patent Office
Office européen des brevets

(11) Numéro de publication: **0 009 426**
**B1**

(12) # FASCICULE DE BREVET EUROPEEN

(45) Date de publication du fascicule du brevet: **15.02.84**

(51) Int. Cl.³: **C 08 F 10/02, C 08 F 4/64**

(21) Numéro de dépôt: **79400589.2**

(22) Date de dépôt: **28.08.79**

(54) **Procédé de polymérisation de l'éthylène et produits en résultant.**

(30) Priorité: **22.09.78 FR 7827168**

(43) Date de publication de la demande:
**02.04.80 Bulletin 80/7**

(45) Mention de la délivrance du brevet:
**15.02.84 Bulletin 84/7**

(84) Etats contractants désignés:
**BE DE FR GB IT LU NL**

(56) Documents cités:
**FR - A - 1 258 244**
**FR - A - 2 099 311**
**FR - A - 2 144 080**
**GB - A - 910 132**
**US - A - 3 029 231**

(73) Titulaire: **BP Chimie Société Anonyme**
**Tour Neptune - La Défense 1 20, place de Seine**
**F-92400 Courbevoie (FR)**

(72) Inventeur: **Lassalle, Dominique**
**Le Meyran, Bd. Gérard Philipe**
**F-13500 Martigues (FR)**
Inventeur: **Havas, Laszlo**
**Le Meyran Bd. Gérard Philipe**
**F-13500 Martigues (FR)**

(74) Mandataire: **Chambert, Jean-Paul et al,**
**BP CHIMIE - Tour Neptune Cédex No 20**
**F-92086 Paris La Défense 1 (FR)**

**Le dossier contient des informations techniques présentées postérieurement au dépôt de la demande et ne figurant pas dans le présent fascicule.**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

EP 0 009 426 B1

Procédé de polymerisation de l'ethylene et produits en resultant

L'invention concerne un procédé de fabrication de polyoléfines, par polymérisation de l'éthylène seul ou accompagné d'autres oléfines au moyen de systèmes catalytiques très actifs, conduisant à la formation de polymères de large répartition des masses moléculaires.

Il a déjà été proposé, comme cela est décrit dans le brevet des Etats Unis d'Amérique No. 3,029,231, de polymériser l'éthylène au sein d'un solvant liquide, tel qu'un hydrocarbure saturé et en présence de systèmes catalytiques constitués d'un composé du titane, en général le tétrachlorure de titane, d'un composé organo-aluminique et d'un composé vinylique éventuellement halogéné, ce dernier composé ayant pour effet de contrôler les masses moléculaires des polymères produits. Afin d'obtenir un effet suffisant, il est toutefois nécessaire de mettre en oeuvre des quantités relativement importantes de ces composés vinyliques, jusqu'á 50 moles pour cent moles d'éthylène, ce qui présente l'inconvénient de diminuer sensiblement l'activité du système catalytique.

Il est par ailleurs connu, comme cela est décrit dans les brevets français no 2 099 311 et 2 144 080, de polymériser l'éthylène à l'aide de systèmes catalytiques de haute activité comprenant i) un composé solide de titane, de magnésium et d'un halogène et ii) un composé organométallique d'un métal des groupes II et III de la classification périodique des éléments, le contrôle des poids moléculaires des polymères produits étant réalisé par l'hydrogène. Il n'est toutefois possible par ce procédé de produire que des polymères de répartition relativement étroite des masses moléculaires.

Il a maintenant été trouvé un procédé de polymérisation de l'éthylène seul ou accompagné d'autres monomères oléfiniques, au moyen d'un système catalytique de haute activité, qui permet d'obtenir des polymères possédant une large répartition des masses moléculaires et un paramètre d'écoulement élevé. La largeur de répartition des masses moléculaires mentionnée ci-dessus est égale au rapport de la masse moléculaire en poids $M_w$ à la masse moléculaire en nombre $M_n$, ces deux grandeurs étant couramment mesurées par perméation de gel. Le paramètre d'écoulement n est égal au rapport:

$$\frac{\log (IF_{21,6}/IF_5),}{\log (21,6/5)}$$

dans lequel $IF_{21,6}$ et $IF_5$ représentent les indices de fluidité du polymère mesurés à 190°C, respectivement sous des charges de 21,6 kg et de 5 kg.

Les polymères obtenus conformément à la présente invention posèdent une largeur de répartition des masses moléculaires comprise entre 8 et 12 et un paramètre d'écoulement compris entre 1,9 et 2,5, ce qui les rend particulièrement aptes à être transformés par extrusion soufflage.

L'invention a pour objet un procédé de polymérisation de l'éthylène, éventuellement accompagné d'une ou plusieurs autres oléfines de formule $CH_2 = CHA$ dans laquelle A est un radical alcoyle contenant 1 8 atomes de carbone, en présence d'un limiteur de croissance de chaînes constitué par de l'hydrogène, dont la proportion en volume par rapport aux oléfines introduites dans le milieu de polymérisation est comprise entre 1 et 80% de manière à obtenir un polymère possédant l'indice de fluidité recherché, au contact d'un système catalytique comprenant:

a) un catalyseur constitué d'un composé solide du titane, du magnésium et d'un halogène tel que le chlore ou le brome,

b) un ou plusieurs composés organométalliques d'un métal des groupes II et III de la classification périodique des éléments, le procédé étant caractérisé en ce que la polymérisation est en outre effectuée en présence d'un ou plusieurs hydrocarbures halogénés insaturés choisis parmi les composés de formule:

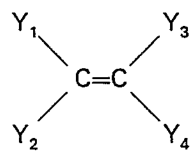

dans laquelle:

$Y_1 = F$, Cl ou Br, $Y_2$, $Y_3 = F$, Cl, Br ou $C_nH_{2n+1}$ n étant un nombre entier compris entre 0 et 6

$Y_4 = C_nH_{2n+1}$

n étant un nombre entier compris entre 0 et 6 et en ce que le rapport molaire du ou des hydrocarbures halogénés insaturés désignés ci-dessus aux composés organométalliques désignés en b) est compris entre 0,01 et 1 et, de préférence, entre 0,05 et 0,15.

Dans la formule qui précède, le nombre "n" du radical $C_nH_{2n+1}$ est de préférence égal à 0 ou à 1; de ce fait, le radical $C_nH_{2n+1}$ est de préférence constitué par un atome d'hydrogène ou par le radical $CH_3$.

Le ou les hydrocarbures halogénés insaturés sont avantageusement choisis parmi le chlorure de vinyle, le chlorure de vinylidène, le 1-2 cis-trichloroéthylène, le 1-2 trans-trichloroéthylène, le 1-chloropropène et le 1-2 dichloropropène.

Le catalyseur peut être obtenu par réaction, entre —20 et 150°C, et, de préférence, entre 60 et 90°C, d'un ou plusieurs composés du titane tétravalent, de formule $TiX_{(4-n)}(OR)_n$ dans laquelle X est un atome de chlore ou de brome, R un radical alcoyle pouvant contenir de 2 à 8

atomes de carbone et n un nombre entier ou fractionnaire pouvant prendre toute valeur entre 0 et 4, et de préférence, entre 0 et 2, et d'un composé organomagnésien de formule MgXR ou de formule $MgR_2$ dans lesquelles X et R répondent aux mêmes définitions que ci-dessus. La réaction entre le ou les composés du titane tétravalent et le composé organomagnésien est avantageusement effectuée en présence d'un halogénure d'alcoyle de formule RX, dans laquelle R et X répondent aux mêmes définitions que ci-dessus, ces divers composés étant mis en oeuvre dans des rapports molaires tels que:

$$0,1 \leqslant TiX_{(4-n)}(OR)_n/RMgX \leqslant 0,5$$

et

$$1 \leqslant RX/RMgX \leqslant 2$$

ou bien

$$0,1 \leqslant TiX_{(4-n)}(OR)_n/MgR_2 \leqslant 0,5$$

et

$$2 \leqslant RX/MgR_2 \leqslant 4$$

Le cas échéant, les composés organomagnésiens peuvent être mis en oeuvre sous la forme de complexes avec des composés donneurs d'électrons tels que des éthers-oxydes.

Le catalyseur peut également être obtenu par réaction, entre −20 et 150°C, et, de préférence, entre 60 et 90°C, du magnésium métal, d'un ou plusieurs composés du titane tétravalent et d'un halogénure d'alcoyle, ces derniers composés répondant respectivement aux formules $TiX_{(4-n)}(OR)_n$ et Rx définies ci-dessus. Dans ce cas, les réactifs sont de préférence mis en oeuvre dans des rapports molaires tels que:

$$0,1 \leqslant TiX_{(4-n)}(OR)_n/Mg \leqslant 0,5$$

et

$$0,5 \leqslant RX/Mg \leqslant 10$$

ou, de préférence, 1, $RX/Mg \leqslant 2$.

Le ou les composés organométalliques d'un métal des groupes II et III de la classification périodique sont de préférence constitués de composés organoaluminiques de formule moyenne $A1R'_xZ_{(3-x)}$, dans laquelle R' représente un groupement alcoyle contenant 1 à 16 atomes de carbone et, de préférence, 2 à 12 atomes de carbone, Z un atome d'hydrogène ou d'un halogène, tel que le chlore ou le brome, et x un nombre entier ou fractionnaire pouvant prendre toute valeur de 1 à 3. De préférence, ces composés sont choisis parmi les tri-alcoylaluminium de formule $A1R'_3$, dans laquelle R' est un groupement alcoyle tel que défini ci-dessus.

Ces composés sont avantageusement mis en oeuvre en quantités telles que le rapport atomique:

Métaux des groupes II et III des cocatalyseurs/Titane des catalyseurs, soit compris entre 0,5 et 50.

La polymérisation est effectuée sous une pression inférieure à 4 MPa et à une température comprise entre 40 et 150°C. Cette opération peut être réalisée par introduction des monomères constitués de l'éthylène et éventuellement, des autres oléfines, dans un diluant liquide tel qu'un hydrocarbure aliphatique saturé ou en l'absence de diluant, par mise en contact direct des monomères à l'état gazeux avec les constituants du système catalytique.

Les constituants du système catalytique peuvent être mis en oeuvre de différentes manières.

Le catalyseur peut être introduit dans le réacteur de polymérisation directement ou sous la forme d'un prépolymère obtenu au moyen d'une polymérisation préalable d'une ou plusieurs oléfines au sein d'un liquide inerte tel qu'un hydrocarbure aliphatique et en présence d'un composé solide de titane, de magnésium et d'un halogène tel que défini en a) ci-dessus.

Le ou les composés organométalliques d'un métal des groupes II et III de la classification périodique peuvent également être introduits directement dans le réacteur de polymérisation. Ces composés peuvent aussi être mis en oeuvre sous la forme d'un support poreux préalablement imprégné de ces composés; dans ce cas le support poreux peut être inerte, organique ou inorganique ou-être constitué du prépolymère mentionné dans le paragraphe précédent.

Les hydrocarbures halogénés peuvent être introduits en mélange avec les composés organométalliques dans le réacteur de polymérisation; ils peuvent aussi être introduits séparément dans le réacteur de polymérisation, en deux ou plusieurs fois, au cours de la polymérisation.

### Exemple A

Préparation d'un catalyseur (catalyseur A)

Dans un ballon en verre de 1 litre, muni d'un agitateur mécanique et d'un dispositif de chauffage et de refroidissement, on introduit successivement à 25°C:

— 500 ml de n-heptane

— 9,7 g de magnésium en poudre (0,40 atome-gramme)

— 1,2 g d'iode.

Sous agitation, on chauffe le contenu du ballon à 80°C et on y introduit:

— 18,2 g de tétrachlorure de titane (96 m.moles)

— et en 3 heures, 74,5 g de chlorure de n-butyle (0,805 mole).

Le précipité obtenu est lavé à trois reprises, avec décantation intermédiaire, par 200 ml de n-heptane. Après séchage, le catalyseur A ainsi obtenu est analysé; il contient 9,1% en poids de titane.

### Exemple B

Préparation d'un catalyseur (catalyseur B)

On opère comme dans l'exemple A précédent, en remplaçant toutefois les 18,2 g de tétrachlorure de titane par:

— 9,1 g de tétrachlorure de titane (48 m.moles) et

— 13,65 g de tétrapropyltitanate (48 m.moles).

Le catalyseur B contient 8,1% en poids de titane.

Exemple C

Préparation d'un catalyseur (catalyseur C)

On prépare tout d'abord du chlorure de n-butylmagnésium, dans un ballon en verre de 1 litre, muni d'un agitateur mécanique, d'un réfrigérant à reflux et d'un dispositif de chauffage ou de refroidissement par circulation d'un fluide dans une double enveloppe. On introduit dans le ballon, sous atmosphère d'azote et à la température ambiante:

— 9,7 g (0,40 atome-gramme) de magnésium en poudre
— 500 ml de n-heptane
— 37 g (0,40 mole) de chlorure de n-butyle
— un cristal d'iode.

Le mileu réactionnel étant chauffé à 80°C, la réaction démarre et elle est entretenue dans ces conditions pendant 2 heures. On obtient ainsi une suspension de 0,40 mole de chlorure de n-butylmagnésium dans du n-heptane.

Toujours sous atmosphère d'azote, on chauffe à 80°C la suspension de chlorure de n-butylmagnésium et on introduit progressivement en 2 heures, au moyen d'une pompe doseuse, une solution de 18,2 g (96 m.moles) de tétrachlorure de titane et de 37,5 g (0,405 mole) de chlorure de n-butyle dans 150 ml de n-heptane. L'introduction terminée, on maintient le milieu réactionnel à 80°C sous agitation pendant 1 heure.

Le précipité obtenu est lavé à plusieurs reprises par du n-heptane. Le catalyseur C séché contient 9% en poids de titane.

Exemple type de polymérisation

Cet exemple décrit le mode opératoire standard utilisé pour essayer les systèmes catalytiques.

Dans un réacteur en acier inoxydable de 3 litres, muni d'un agitateur et d'un dispositif de chauffage et de refroidissement, préalablement purgé par un courant d'azote, on introduit 1 500 ml de n-heptane qu'on chauffe à 80°C. On ajoute ensuite les constituants du système catalytique puis de l'hydrogène sous une pression relative comprise entre 0,15 et 0,2 MPa. On admet ensuite de l'éthylène sous un débit constant de 120 g/h. Excepté dans les exemples 23, 24 et 25, l'hydrocarbure halogéné est introduit dans le réacteur en deux fractions égales, la première dès l'admission de l'éthylène et la seconde après 2 h 30.

Après 6 heures de polymérisation, on isole le polymère formé qui est pesé et analysé. L'activité du catalyseur est déduite du poids de polymère formé; elle est exprimée en grammes de polymère obtenu par gramme de titane du catalyseur, par heure et par 105 Pa de pression relative d'éthylène mesurée. Par ailleurs, on mesure, suivant la norme ASTM D 1238, conditions P et F, les indices de fluidité du polymère sous 5 kg et sous 21,6 kg, ce qui permet de calculer le paramètre d'écoulement

$$n = \frac{\log (IF_{21,6}/IF_5)}{\log (21,6/5)}$$

Par ailleurs, on mesure par perméation de gel la masse moléculaire moyenne en masse $M_w$ et la masse moléculaire moyenne en nombre $M_n$, des polymères obtenus, d'où on déduit le rapport $M_w/M_n$.

Exemples 1 à 18

Dans cette série d'exemples, on polymérise de l'éthylène conformément au mode opératoire standard décrit dans l'exemple type de polymérisation, en présence d'une quantité de catalyseur A correspondant à 0,375 m.at.g de titane et de 3 m.moles de tri-n-octylaluminium. Les résultats obtenus avec divers hydrocarbures insaturés sont présentés dans le tableau I, en regard de deux essais comparatifs $C_1$ et $C_2$ effectués dans les mêmes conditions, mais en l'absence de tout l'hydrocarbure halogéné.

On observe que les hydrocarbures halogénés éthyléniques mis en oeuvre, même en très faibles proportions, entraînent une augmentation très sensible du paramètre d'écoulement ainsi que de la largeur de répartition des masses moléculaires $M_w/M_n$.

Exemples 19 à 22

On opère dans cette série d'exemples comme dans l'exemple 1, en changeant la nature du composé organométallique mis en oeuvre. Les résultats, qui sont présentés dans le tableau II, montrent l'influence des composés organométalliques sur les indices de fluidité et sur le paramètre d'écoulement.

Exemples 23 à 25

Cette série d'exemples, dont les résultats figurent dans le tableau II, vise à illustrer différents modes de mise en oeuvre des hydrocarbures halogénés.

Dans l'exemple 23, on opère comme dans l'exemple 2, à la différence que la totalité du dichloréthylène est introduite dans le réacteur dès l'admission de l'éthylène.

Dans l'exemple 24, on opère comme dans l'exemple 2, à la différence que la totalité du dichloréthylène est introduite dans le réacteur, sous la forme d'un mélange avec le tri-n-octylaluminium, préalablement maintenu 1 heure à 80°C, avant l'addition du catalyseur.

Dans l'exemple 25, on opère comme dans l'exemple 2, à la différence que la totalité du dichloréthylène est introduite dans le réacteur sous la forme d'un mélange avec 3 m.moles de tri-isobutylaluminium préalablement maintenu 1 heure à 80°C, avant l'addition du catalyseur.

Exemples $C_3$, $C_4$ et $C_5$

Ces exemples, dont les résultats figurent dans le tableau II, sont des exemples comparatifs illustrant la mise en oeuvre d'hydrocarbures halogénés saturés, au lieu des hydrocarbures insaturés de l'invention. On opère comme dans l'exemple 2, en remplaçant le chlorure de vinylidène par du 1—2 dichloroéthane (exemple $C_3$), du 1—2—2'trichloroéthane (exemple $C_4$) et du 1—1', 2—2'tétrachloroéthane (exemple $C_5$). On observe que l'activité catalytique d'une part, ainsi que les indices de fluidité du polymère, d'autre part, sont très fortement diminués, au regard des résultats obtenus dans les exemples précédents.

Exemples 26 à 28 et exemples comparatifs $C_6$ à $C_8$

Dans les exemples 26, 27 et 28, on polymérise de l'éthylène selon le mode opératoire standard décrit dans l'exemple type de polymérisation, en présence d'une quantité du catalyseur B correspondant à 0,375 m.at.g de titane, de 3 m.moles d'un composé organoaluminique et de chlorure de vinylidène. La nature des composés mis en oeuvre, leurs quantités, ainsi que les résultats obtenus figurent dans le tableau III, en regard des résultats obtenus dans les essais comparatifs $C_6$, $C_7$ et $C_8$, réalisés dans les mêmes conditions mais en l'absence de chlorure de vinylidène.

On observe que l'addition de chlorure de vinylidène entraîne une augmentation sensible du paramètre d'écoulement, sans provoquer de diminution de l'activité catalytique.

Exemple 29 et exemple comparatif $C_9$

Dans l'exemple 29, on polymérise de l'éthylène conformément au mode opératoire standard décrit dans l'exemple type de polymérisation, en présence d'une quantité de catalyseur C correspondant à 0,375 m.at.g de titane, de 3 m.moles de tri-octylaluminium et de 0,3 m.moles de chlorure de vinylidène. Les résultats obtenus dans l'exemple 29 sont présentés dans le tableau IV, en regard des résultats d'un essai comparatif $C_9$ effectué dans les mêmes conditions, mais en l'absence de tout hydrocarbure halogéné.

On observe également qu'en présence du catalyseur C, le chlorure de vinylidène tend à accroître d'une façon très nette le paramètre d'écoulement du polyéthylène obtenu.

TABLEAU I

| Exemple | Hydrocarbure halogéné | | Pression relative ($10^5$ Pa) | Activité catalytique (g/g Ti/h/$10^5$ Pa) | Indices de fluidité à 190°C sous | | Paramètre d'écoulement "n" | $M_w/M_n$ |
|---|---|---|---|---|---|---|---|---|
| | Nature | Quantité (m. moles) | | | 5 kg | 21,6 kg | | |
| $C_1$ | – | 0 | 1,6 | 6 670 | 3,1 | 39 | 1,73 | 5 |
| $C_2$ | – | 0 | 2 | 5 550 | 2,4 | 29,9 | 1,72 | 6,1 |
| 1 | $CH_2 = CCl_2$ | 0,3 | 2,6 | 5 210 | 2,8 | 52 | 1,99 | 8,2 |
| 2 | id | 0,3 | 2 | 6 040 | 2,4 | 47 | 2,03 | 8,7 |
| 3 | id | 0,3 | 1,8 | 5 520 | 2,2 | 44 | 2,05 | 9.4 |
| 4 | id | 0,3 | 1,2 | 5 130 | 0,7 | 25 | 2,44 | – |
| 5 | id | 0,6 | 2 | 5 520 | 1,9 | 34,4 | 1,98 | 11.3 |
| 6 | id | 0,9 | 2 | 5 520 | 1,45 | 26,8 | 1,99 | 9,2 |
| 7 | id | 0,9 | 2,2 | 4 790 | 1,9 | 37,8 | 2,04 | 10,2 |
| 8 | $CH_2 = CHCl$ | 0,06 | 2 | 4 790 | 1,9 | 28 | 1,84 | 8 |
| 9 | id | 0,12 | 2 | 5 520 | 2,3 | 36 | 1,88 | 8,2 |
| 10 | id | 0,15 | 1,5 | 7 810 | 2,6 | 47,2 | 1,98 | 9,3 |
| 11 | id | 0,21 | 1,5 | 5 560 | 0,5 | 9,8 | 2,08 | – |
| 12 | id | 0,24 | 1,8 | 5 100 | 1,6 | 26 | 1,90 | 9,5 |
| 13 | $CH_3 - CH = CHCl$ | 0,3 | 1,5 | 5 630 | 2 | 36,3 | 1,98 | – |
| 14 | id | 0,6 | 1,5 | 5 600 | 0,7 | 15,1 | 2,11 | – |
| 15 | $CH_3 - CH = CCl_2$ | 0,21 | 1,5 | 5 130 | 2,8 | 56,2 | 2,05 | 8,7 |
| 16 | id | 1,2 | 1,5 | 6 060 | 1,9 | 35,8 | 2,04 | 8,2 |
| 17 | trans CHCl = CHCl | 0,15 | 1,5 | 7 410 | 2 | 34,4 | 1,94 | 7,7 |
| 18 | id | 2,5 | 2 | 4 550 | 1,25 | 22,2 | 1,96 | 8,7 |

TABLEAU II

| Exemple | Composé organométallique | | Hydrocarbure halogéné | | Pression relative d'$H_2$ ($10^5$ Pa) | Activité catalytique (g/g Ti/h/$10^5$ Pa) | Indices de fluidité à 190°C sous | | Paramètre d'écoulement "n" |
|---|---|---|---|---|---|---|---|---|---|
| | Nature | Quantité (m.moles) | Nature | Quantité (m. moles) | | | 5 kg | 21,6 kg | |
| 19 | $Al(C_8H_{17})_2Cl$ | 3 | $CH_2{=}CCl_2$ | 0,3 | 2,5 | 4 450 | 1 | 17,5 | 1,95 |
| 20 | $Al_2(C_3H_{17})_3(C_2H_5)_2Cl$ | 3 | id | 0,3 | 2,5 | 5 630 | 4 | 59 | 1,84 |
| 21 | $Al(iso\text{-}C_4H_9)_3$ | 3 | id | 0,3 | 2,5 | 5 560 | 4,9 | 69 | 1,81 |
| 22 | $Al_2(iso\text{-}C_4H_9)_3(C_2H_5)_2Cl$ | 3 | id | 0,3 | 2,5 | 5 560 | 3 | 42 | 1,80 |
| 23 | $Al(C_8H_{17})_3$ | 3 | $CH_2{=}CCl_2$ | 0,3 | 1,6 | 5 210 | 0,9 | 17,5 | 2,03 |
| 24 | id | 3 | id | 0,3 | 2 | 4 400 | 0,6 | 11,3 | 2,00 |
| 25 | $Al(iso\text{-}C_4H_9)_3$ | 3 | id | 0,3 | 2 | 4 440 | 0,7 | 12,9 | 1,99 |
| $C_3$ | $Al(C_8H_{17})_3$ | 3 | $CH_2Cl{-}CH_2Cl$ | 3 | 1,5 | 3 200 | 0,5 | 9,0 | 1,97 |
| $C_4$ | id | 3 | $CHCl_2{-}CH_2Cl$ | 1,5 | 1,5 | 1 670 | <0,1 | <1 | – |
| $C_5$ | id | 3 | $CHCl_2{-}CHCl_2$ | 0,4 | 1,5 | 3 140 | 0,15 | 2,7 | 1,97 |

TABLEAU III

| Exemple | Composé organométallique | | Hydrocarbure halogéné | | Pression relative d'$H_2$ ($10^5$ Pa) | Activité catalytique (g/g Ti/h/$10^5$ Pa) | Indices de fluidité à 190°C sous | | Paramètre d'écoulement "n" |
|---|---|---|---|---|---|---|---|---|---|
| | Nature | Quantité (m. moles) | Nature | Quantité (m. moles) | | | 5 kg | 21,6 kg | |
| $C_6$ | $Al(C_8H_{17})_3$ | 3 | – | – | 1,5 | 4 170 | 14,9 | 137,5 | 1,52 |
| 26 | id | 3 | $CH_2{=}CCl_2$ | 0,3 | 1,5 | 4 050 | 6,2 | 69,5 | 1,65 |
| $C_7$ | $Al(iso\text{-}C_4H_9)_3$ | 3 | – | – | 1,5 | 3 180 | 8,4 | 80 | 1,54 |
| 27 | id | 3 | $CH_2{=}CCl_2$ | 0,6 | 1,5 | 3 030 | 4,8 | 49,8 | 1,60 |
| $C_8$ | $Al_2(C_8H_{17})_3(C_2H_5)_2Cl$ | 3 | – | – | 1,5 | 4 450 | 16,5 | 151 | 1.51 |
| 28 | id | 3 | $CH_2{=}CCl_2$ | 0,9 | 1,5 | 4 320 | 10 | 120,5 | 1,70 |

TABLEAU IV

| Exemple | Composé organométallique | | Hydrocarbure halogéné | | Pression relative d'$H_2$ ($10^5$ Pa) | Activité catalytique (g/g Ti/h/$10^5$ Pa) | Indices de fluidité à 190°C sous | | Paramètre d'écoulement "n" |
|---|---|---|---|---|---|---|---|---|---|
| | Nature | Quantité (m. moles) | Nature | Quantité (m. moles) | | | 5 kg | 21,6 kg | |
| $C_9$ | $Al(C_8H_{17})_3$ | 3 | – | – | 1,5 | 6 710 | 4,5 | 54,4 | 1,70 |
| 29 | id | 3 | $CH_2{=}CCl_2$ | 0,3 | 1,5 | 5 430 | 2,0 | 34 | 1,93 |

**Revendications**

1. Procédé de fabrication de polyoléfines de large répartition des masses moléculaires, par polymérisation de l'éthylène, éventuellement accompagné d'une ou plusieurs autres oléfines de formule $CH_2=CHA$, dans laquelle A est un radical alcoyle contenant 1 à 8 atomes de carbone, en présence d'un limiteur de croissance de chaînes constitué par de l'hydrogène, dont la proportion en volumes par rapport aux oléfines introduites dans le milieu de polymérisation est comprise entre 1 et 80%, au contact d'un système catalytique comprenant:
a) un catalyseur constitué d'un composé solide du titane, du magnésium et d'un halogène tel que le chlore ou le brome
b) un ou plusieurs composés organométalliques d'un métal des groupes II et III de la classification périodique des éléments, le procédé étant caractérisé en ce que la polymérisation est en outre effectuée en présence d'un ou plusieurs hydrocarbures halogénés insaturés, choisis parmi les composés de formule:

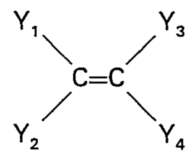

dans laquelle:
$Y_1 = F$, Cl ou Br, $Y_2, Y_3 = F$, Cl, Br ou $C_nH_{2n+1}$ n étant un nombre entier compris entre 0 et 6
$Y_4 = C_nH_{2n+1}$
n étant un nombre entier compris entre 0 et 6 et en ce que le rapport molaire du ou des hydrocarbures halogénés insaturés désignés ci-dessus aux composés organométalliques désignés en b) est compris entre 0, 01 et 1.

2. Procédé revendiqué en 1, selon lequel le ou les hydrocarbures halogénés insaturés sont choisis parmi des composés dans lesquels le radical $C_nH_{2n+1}$ est constitué par un atome d'hydrogène ou par le radical $CH_3$.

3. Procédé revendiqué en 1, selon lequel le ou les hydrocarbures halogénés insaturés sont choisis parmi le chlorure de vinyle, le chlorure de vinylidène, le 1—2 cis-trichloréthylène, le 1—2 trans-trichloréthylène, le 1-chloropropène et le 1—2 dichloropropène.

4. Procédé revendiqué en 1, selon lequel le catalyseur est constitué d'un composé obtenu par réaction, entre —20 et 150°C,
c) d'un ou plusieurs composés du titane tétravalent de formule $TiX_{(4-n)}(OR)_n$, dans laquelle X est un atome de chlore ou de brome, R un radical alcoyle pouvant contenir de 2 à 8 atomes de carbone, et n un nombre ou fractionnaire pouvant prendre toute valeur entre 0 et 4,
d) d'un composé organomagnésien de formule RMgX, dans laquelle X et R satisfont aux définitions ci-dessus,
e) d'un halogénure d'alcoyle de formule RX, dans laquelle R et X satisfont aux définitions ci-dessus,
ces divers composés étant mis en oeuvre dans des rapports molaires tels que:
$0,1 \leqslant TiX_{(4-n)}(OR)_n/RMgX \leqslant 0,5$
$1 \leqslant RX/RMgX \leqslant 2$

5. Procédé revendiqué en 1), selon lequel le catalyseur est constitué d'un composé obtenu par réaction, entre —20 et 150°C,
f) d'un ou plusieurs composés du titane tétravalent de formule $TiX_{(4-n)}(OR)_n$, dans laquelle X est un atome de chlore ou de brome, R un radical alcoyle pouvant contenir de 2 à 8 atomes de carbone, et n un nombre entier ou fractionnaire pouvant prendre toute valeur entre 0 et 4,
g) d'un composé organomagnésien de formule $MgR_2$ dans laquelle R répond à la même définition que ci-dessus et
h) d'un halogènure d'alcoyle de formule RX, dans laquelle R et X satisfont aux définitions ci-dessus, ces divers composés étant mis en oeuvre dans des rapports molaires tels que:
$0,1 \leqslant TiX_{(4-n)}(OR)_n/MgR_2 \leqslant 0,5$
et $2 \leqslant RX/MgR_2 \leqslant 4$

6. Procédé revendiqué en 1, selon lequel le catalyseur est constitué d'un composé obtenu par réaction, entre —20 et 150°C,
i) de magnésium métal,
j) d'un composé du titane tétravalent de formule $TiX_{(4-n)}(OR)_n$, dans laquelle X est un atome de chlore ou de brome, R un radical alcoyle pouvant contenir de 2 à 8 atomes de carbone et n un nombre entier ou fractionnaire pouvant prendre toute valeur entre 0 et 4,
k) d'un halogénure d'alcoyle de formule RX, dans laquelle R et X satisfont aux définitions ci-dessus, ces divers composés étant mis en oeuvre dans des rapports molaires tels que:
$0,1 \leqslant TiX_{(4-n)}(OR)_n/Mg \leqslant 0,5$
et $0,5 \leqslant RX/Mg \leqslant 10$.

7. Procédé revendiqué dans l'une quelconque des revendications 1 à 6, selon lequel le catalyseur est préparé à partir de tétrachlorure de titane, en tant que composé du titane tétravalent.

8. Procédé revendiqué dans l'une quelconque des revendications 1 à 6, selon lequel le catalyseur est préparé conjointement à partir de tétrachlorure de titane et de tétrapropyltitanate, en tant que composé du titane tétravalent.

9. Procédé revendiqué en 1, selon lequel le ou les composés organométalliques d'un métal des groupes II et III de la classification des éléments sont constitués de composés organo-aluminques de formule moyenne $AlR'_xZ_{(3-x)}$, dans laquelle R' représente un groupement alcoyle contenant 1 à 16 atomes de carbone, Z un atome d'hydrogène ou d'un halogène, tel que le chlore un le brome, et x un nombre entier ou fractionnaire pouvent prendre toute valeur de 1 à 3.

10. Procédé revendiqué en 1, selon lequel le ou les composés organométalliques d'un métal des groupes II et III de la classification périodique des éléments sont constitués de tri-alcoylaluminium de formule $AlR'_3$, dans laquelle R' représente un groupement alcoyle contenant de 2 à 12 atomes de carbone.

## Claims

1. A process for the production of polyolefins having a broad molecular weight distribution, by the polymerisation of ethylene, optionally accompanied by one or more other olefins having the formula $CH_2=CHA$ wherein A is an alkyl radical containing from 1 to 8 carbon atoms in the presence of a chain growth limiting agent formed by hydrogen, the proportion of which by volume with respect to the olefins introduced into polymerisation medium is between 1 and 80%, in contact, with a catalytic system comprising:
a) a catalyst comprising a solid compound of titanium, magnesium and a halogen such as chlorine or bromine,
b) one or more organometallic compounds of a metal of groups II and III of the periodic table of elements, the process being characterised in that polymerisation is also effected in the presence of one or more unsaturated halogenated hydrocarbons selected from compounds of the formula:

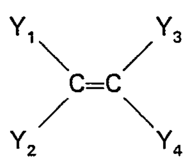

in which:
$Y_1$ = F, Cl or Br, $Y_2$, $Y_3$ = F, Cl, Br or $C_nH_{2n+1}$, n being an integer of between 0 and 6.
$Y_4 = C_nH_{2n+1}$, n being an integer of between 0 and 6, and that the molar ratio of the above-identified unsaturated halogenated hydrocarbon or hydrocarbons to the organometallic compounds specified in b) is between 0.01 and 1.

2. A process as claimed in 1, wherein the unsaturated halogenated hydrocarbon or hydrocarbons is or are selected from compounds in which the radical $C_nH_{2n+1}$ is formed by a hydrogen atom or by the radical $CH_3$.

3. A process as claimed in 1, wherein the unsaturated halogenated hydrocarbon or hydrocarbons is or are selected from vinyl chloride, vinylidene chloride, 1,2 cis-trichlorethylene, 1,2-trans-trichloroethylene, 1-chloropropene and 1,2-dichloropropene.

4. A process as claimed in 1, wherein the catalyst comprises a compound produced by reaction, at between −20 and 150°C, of
c) one or more compounds of tetravalent titanium having the formula $TiX_{(4-n)}(OR)_n$, wherein X is a chlorine or bromine atom, R is an alkyl radical which may contain from 2 to 8 carbon atoms and n is an integer or a fraction which can be of any value between 0 and 4,
d) an organomagnesium compound having the formula RMgX, wherein X and R are as defined above, and
e) an alkyl halide having the formula RX, wherein R and X are as defined above,
said various compounds being used in molar ratios such that:

$$0.1 \leqslant TiX_{(4-n)}(OR)_n/RMgX \leqslant 0.5$$

and

$$1 \leqslant RX/RMgX \leqslant 2$$

5. A process as claimed in 1, wherein the catalyst comprises a compound which is produced by reaction, at between −20 and 150°C, of
f) one or more compounds of tetravalent titanium having the formula $TiX_{(4-n)}(OR)_n$, wherein X is a chlorine or bromine atom, R is an alkyl radical which may contain from 2 to 8 carbon atoms and n is an integer or a fraction which can be of any value between 0 and 4,
g) an organomagnesium compound having the formula $MgR_2$, wherein R is as defined above, and
h) an alkyl halide having the formula RX, wherein R and X are as defined above, said various compounds being used in molar ratios such that:

$$0.1 \leqslant TiX_{(4-n)}(OR)_n/MgR_2 \leqslant 0.5$$

and

$$2 \leqslant RX/MgR_2 \leqslant 4$$

6. A process as claimed in 1, wherein the catalyst comprises a compound produced by reaction, at between −20 and 150°C, of
i) metal magnesium,
j) a compound of tetravalent titanium having the formula $TiX_{(4-n)}(OR)_n$, wherein X is a chlorine or bromine atom, R is an alkyl radical which may contain from 2 to 8 carbon atoms and n is an integer or a fraction which can be of any value between 0 and 4, and
k) an alkyl halide having the formula RX, wherein R and X are as defined above, said various compounds being used in molar ratios such that:

$$0.1 \leqslant TiX_{(4-n)}(OR)_n/Mg \leqslant 0.5$$

and

$$0.5 \leqslant RX/Mg \leqslant 10.$$

7. A process as claimed in any one of claims 1 to 6 wherein the catalyst is prepared from titanium tetrachloride, as the tetravalent titanium compound.

8. A process as claimed in any one of claims 1 to 6 wherein the catalyst is pepared jointly from titanium tetrachloride and tetrapropyl titanate, as the tetravalent titanium compound.

9. A process as claimed in 1, wherein the organometallic compound or compounds of a metal of groups II and III of the periodic table of elements comprise organoaluminium compounds having the mean formula $AlR'_xZ_{(3-x)}$, wherein R' represents an alkyl group containing from 1 to 16 carbon atoms, Z represents

a hydrogen atom or a halogen such as chlorine or bromine and x is an integer or a fraction which can be of any value of from 1 to 3.

10. A process as claimed in 1 wherein the organometallic compound or compounds of a metal of groups II and III of the periodic table of elements comprise trialkylaluminium having the formula $AlR'_3$, wherein R' represents an alkyl group containing from 2 to 12 carbon atoms.

**Patentansprüche**

1. Verfahren zur Herstellung von Polyolefinen mit einer breiten Verteilung der Molekularmassen durch Polymerisation von Ethylen, gegebenenfalls zusammen mit einem oder mehreren anderen Olefinen der Formel $CH_2 = CHA$, in der A eine Alkylgruppe mit 1 bis 8 Kohlenstoffatomen ist, in Gegenwart eines Kettenwachstumsreglers bestehend aus Wasserstoff, dessen Volumenanteil bezogen auf die in das Polymerisationsmedium eingebrachten Olefine 1 bis 80% beträgt, in Berührung mit einem Katalysatorsystem bestehend aus
a) einem Katalysator in Form ein festen Verbindung von Titan, Magnesium und einem Halogen wie Chlor oder Brom,
b) einer oder mehrerer metallorganischen Verbindungen eines Metalls der Gruppen II und III des Periodensystems der Elemente, dadurch gekennzeichnet, daß die Polymerisation darüberhinaus in Gegenwart eines oder mehrerer ungesättigter Halogenkohlenwasserstoffe durchgeführt wird, die ausgewählt werden unter Verbindungen der Formel

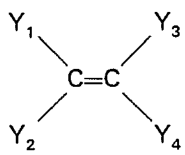

in der $Y^1 = F$, Cl oder Br, $Y^2$, $Y^3 = F$, Cl, Br oder $C_nH_{2n+1}$, wobei n eine ganze Zahl von 0 bis 6 ist, $Y^4 = C_nH_{2n+1}$, wobei n eine ganze Zahl von 0 bis 6 ist, und daß das Molverhältnis des oder der oben bezeichneten ungesättigten Halogenkohlenwasserstoffe(s) zu den unter b) angegebenen metallorganischen Verbindungen 0,01 bis 1 beträgt.

2. Verfahren nach Anspruch 1, bei dem der bzw. die ungesättigte(n) Halogenkohlenwasserstoff(e) ausgewählt werden unter Verbindungen, bei denen die Gruppe $C_nH_{2n+1}$ für ein Wasserstoffatom oder für die Gruppe $CH_3$ steht.

3. Verfahren nach Anspruch 1, bei dem der bzw. die ungesättigte(n) Halogenkohlenwasserstoff(e) ausgewählt werden unter Vinylchlorid, Vinylidenchlorid, 1,2-cis-Trichlorethylen, 1,2-trans-Trichlorethylen, 1-Chlorpropen und 1,2-Dichlorpropen.

4. Verfahren nach Anspruch 1, bei dem der Katalysator eine Verbindung ist, die erhalten worden ist durch Reaktion bei —20 bis 150°C von
c) einer oder mehrerer Verbindungen des 4-wertigen Titans der Formel $TiX_{(4-n)}(OR)_n$, in der X ein Chlor- oder Bromatom, R eine Alkylgruppe mit 2 bis 8 Kohlenstoffatomen und n eine ganze oder gebrochene Zahl mit einem beliebigen Wert von 0 bis 4 ist,
d) einer magnesiumorganischen Verbindung der Formel RMgX, in der X und R den oben angegebenen Definitionen entsprechen,
e) einem Alkylhalogenid der Formel RX, in der R und X den oben angegebenen Definitionen entsprechen, wobei diese verschiedenen Verbindungen in folgenden Molverhältnissen eingesetzt werden:

$0,1 \leqslant TiX_{(4-n)}(OR)_n/RMgX \leqslant 0,5$
$1 \leqslant RX/RMgX \leqslant 2$

5. Verfahren nach Anspruch 1, bei dem der Katalysator eine Verbindung ist, die erhalten worden ist durch Umsetzung bei —20 bis 150°C,
f) einer oder mehrerer Verbindungen des 4-wertigen Titans der Formel $TiX_{(4-n)}(OR)_n$, in der X ein Chlor- oder Bromatom ist, R eine Alkylgruppe mit 2 bis 8 Kohlenstoffatomen und n eine ganze oder gebrochene Zahl mit einem beliebigen Wert von 0 bis 4,
g) einer magnesiumorganischen Verbindung der Formel $MgR_2$, in der R wie oben definiert ist und
h) einem Alkylhalogenid der Formel RX, in der R und X wie oben definiert sind, wobei diese verschiedenen Verbindungen in folgenden Molverhältnissen eingesetzt werden:

$0,1 \leqslant TiX_{(4-n)}(OR)_n/MgR_2 \leqslant 0,5$
$2 \leqslant RX/MgR_2 \leqslant 4$

6. Verfahren nach Anspruch 1, bei dem der Katalysator eine Verbindung ist, die erhalten worden ist durch Umsetzung bei —20 bis 150°C,
i) von metallischem Magnesium
j) einer Verbindung des 4-wertigen Titans der Formel $TiX_{(4-n)}(OR)_n$, in der X ein Chlor- oder Bromatom, R eine Alkylgruppe mit 2 bis 8 Kohlenstoffstomen und n eine ganze oder gebrochene Zahl mit einem beliebigen Wert von 0 bis 4 ist, und
k) einem Alkylhalogenid der Formel RX, in der R und X wie oben definiert sind, wobei die verschiedenen Verbindungen in folgenden Molverhältnissen eingesetzt werden:

$0,1 \leqslant TiX_{(4-n)}(OR)_n/MgX \leqslant 0,5$
$0,5 \leqslant RX/Mg \leqslant 10.$

7. Verfahren nach einem der Ansprüche 1 bis 6, bei dem der Katalysator ausgehend von Titantetrachlorid als Verbindung des 4-wertigen Titans hergestellt wird.

8. Verfahren nach einem der Ansprüche 1 bis 6, bei dem der Katalysator gleichzeitig ausgehend von Titantetrachlorid und Tetrapropyltitanat als Verbindung des 4-wertigen Titans hergestellt wird.

9. Verfahren nach Anspruch 1, bei dem die metallorganische(n) Verbindung(en) eines Metalls der Gruppen II und III des Periodensystems der Elemente besteht(bestehen)-ausaluminiumorganischen Verbindungen der

mittleren Formel $AlR'_xZ_{(3-x)}$, in der R' eine Alkylgruppe mit 1 bis 16 Kohlenstoffatomen, Z ein Wasserstoff- oder ein Halogen-atom wie Chlor oder Brom und x eine ganze oder gebrochene Zahl mit einem beliebigen Wert von 1 bis 3 ist.

10. Verfahren nach Anspruche 1, bei dem die metallorganische(n) Verbindung(en) eines Metalls der Gruppen II und III des Periodensystems der Elemente besteht (bestehen), aus einem Trialkylaluminium der Formel $AlR'_3$, in der R' eine Alkylgruppe mit 2 bis 12 Kohlenstoffatomen bedeutet.